# NEUE EUROPÄISCHE PATENTSCHRIFT

(11) **EP 0 627 164 B2**
(45) Veröffentlichungstag und Bekanntmachung des Hinweises auf die Entscheidung über den Einspruch: **22.08.2001**
(45) Hinweis auf die Patenterteilung: 17.07.1996
(21) Anmeldenummer: 94810303.1
(22) Anmeldetag: 26.05.1994
(51) Int. Cl.: A01N 47/38

(54) **Mikrobizide Mischungen die Prochloraz und Cyprodinil enthalten**
Microbicidal compositions comprising prochloraz and cyprodinil
Compositions microbicides, contenant du prochloraz et du cyprodinil

(30) Priorität: 04.06.1993 CH 167493
(43) Veröffentlichungstag der Anmeldung: 07.12.1994
(73) Patentinhaber: Syngenta Participations AG, 4058 Basel (CH)
(72) Erfinder: Zeun, Ronald, Dr., D-79395 Neuenburg (DE)
(74) Vertreter: Bastian, Werner Maria

(56) Entgegenhaltungen:
- EP-A- 0 310 550
- EP-A- 0 548 025
- EP-A- 0 556 157
- EP-B1- 0 072 156
- FR-A- 2 516 349
- GB-A- 2 258 615
- GB-A- 2 267 644

## Beschreibung

Die vorliegende Erfindung betrifft mikrobizide Zweikomponenten-Gemische mit synergistisch gesteigerter Wirkung und Verfahren zur Anwendung solcher Gemische im Pflanzenschutz, insbesondere als Fungizide im Getreide.

Die Komponente I ist das Imidazol der Formel 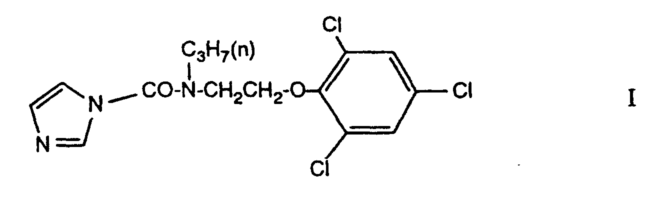 N-Propyl-N-[2-(2,4,6-trichlorophenoxy)ethyl]imidazol-1-carboxamid (= Prochloraz) oder eines seiner Salze oder seiner Metallkomplexe (Referenzen: GBP 1,469,772; US-4,154,945).

Die Komponente II ist das 2-Anilinopyrimidin der Formel 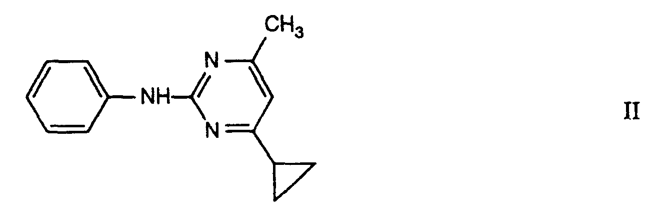 4-Cyclopropyl-6-methyl-N-phenyl-2-pyrimidinamin (= Cyprodinil)oder eines seiner Salze oder seiner Metallkomplexe (Referenz: EP-A-310 550).

Unter den Säuren, die zur Herstellung von Salzen der Formel I oder II verwendet werden können, sind zu nennen: Halogenwasserstoffsäure wie Fluorwasserstoffsäure, Chlorwasserstoffsäure, Bromwasserstoffsäure oder Jodwasserstoffsäure sowie Schwefelsäure, Phosphorsäure, Salpetersäure und organische Säuren wie Essigsäure, Trifluoressigsäure, Trichloressigsäure, Propionsäure, Glycolsäure, Thiocyansäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure, 2-Phenoxybenzoesäure, 2-Acetoxybenzoesäure oder 1,2-Naphthalin-disulfonsäure.

Der Begriff Salze schliesst auch Metallkomplexe der beiden basischen Komponenten I und II ein. Diese Komplexe können wahlweise nur eine Komponente oder auch beide Komponenten unabhängig betreffen. Es lassen sich auch Metallkomplexe herstellen, die beide Wirkstoffe I und II miteinander zu einem gemischten Komplex verbinden.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4.Periode. Die Metalle können dabei in den verschiedenen ihnen zukommenden Wertigkeiten vorliegen. Die Metallkomplexe können ein- oder mehrkernig auftreten, d.h. sie können ein oder mehrere organische Molekülanteile als Liganden enthalten.

In der Praxis kann man vorteilhaft die Wirkstoffe I und II als freie Basen einsetzen, denen man auch weitere agrarchemische Aktivsubstanzen wie Insektizide, Akarizide, Nematizide, Herbizide, Wuchsregulatoren und Düngemittel, insbesondere aber weitere Mikrobizide, zufügen kann.

In den letzten Jahren sind sogenannte Ergosterin-Biosynthese-Hemmer in verstärktem Masse auf den Markt gekommen, d.h. Präparate, deren Fungizid-Wirkung darauf beruht, die Biosynthese des in der Zellmembran von Pilzen vorkommenden Ergosterins zu hindern. Fungizide, die im Molekül einen Imidazol- oder einen 1,2,4-Triazolrest enthalten, wirken in der Regel bei diesem Vorgang als 14-C Demethylierungshemmer (= DMI). Der jabrelange Einsatz Von Präparaten auf Imidazol-und 1,2,4-Triazol-Basis hat allerdings stellenweise schon zum Auftreten von Pilzstämmen mit nachweislich reduzierter Sensitivität geführt.

Es hat sich nun überraschenderweise gezeigt, dass Mischungen des Imidazols I mit dem Anilinopyrimidin II in ihrer fungiziden Wirkung nicht nur additive Wirkung, sondern in bestimmten Mengenverhältnissen deutliche synergistisch gesteigerte Wirkung auch bei Pilz-Isolaten entfalten, die eine reduzierte Sensitivität auf Imidazol- und 1,2,4-Triazol-Fungizide erworben haben.

Die vorliegende Erfindung stellt daher eine ganz wesentliche Bereicherung der Technik dar.

Gegenstand der vorliegenden Erfindung ist neben dem Zweikomponenten-Gemisch auch ein Verfahren zur Bekämpfung von Pilzen, das gekennzeichnet ist durch Behandlung einer durch Pilze befallenen oder gefährdeten Stelle in beliebiger Reihenfolge oder gleichzeitig mit a) dem Wirkstoff der Formel I oder einem seiner (Metall) Salze und mit b) dem Wirkstoff der Formel II oder einem seiner Salze, wobei die Salze auch so gewählt sein können, dass beide Wirkstoffe an einem Säurerest oder, im Falle eines Metallkomplexes, an ein zentrales Metall-Kation gebunden sind.

Günstige Mischungsverhältnisse der beiden Wirkstoffe sind I:II = 10:1 bis 1:20, bevorzugt I:II = 6:1 bis 1:6. In vielen Fällen sind Mischungen vorteilhaft, bei denen das Mischungsverhälnis der reinen Aktivsubstanzen I:II = 3:1 bis 1:3 beträgt.

Die erfindungsgemässen Wirkstoffmischungen I+II besitzen sehr vorteilhafte kurative, präventive und systemische Fungizid-Eigenschaften zum Schutz von Kulturpflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Sie können auch als Beizmittel zur Behandlung von Pflanzenvermehrungsgut, insbesondere Saatgut (Früchte, Knollen, Körner) und Pflanzenstecklingen (z.B. Reis) zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch ihre Umweltfreundlichkeit aus. Dies trifft insbesondere auch auf Mikroorganismen zu, die gegen Fungizide aus der Imidazol- und Triazol-Klasse reduzierte Sensitivität entwickelt haben.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattung Hemileia, Rhizoctonia, Puccinia); Fungi imperfecti (z.B. Botrytis, Helminthosporium, Rhynchosporium, Fusarium, Septoria, Cercospora, Altemaria, Pyricularia und insbesondere Pseudocercosporella herpotrichoides).

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erdbeeren, Himbeeren und Brombeeren); Hülsenfrüchte: (Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffe, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Besonders wirksam sind die erfindungsgemässen Wirkstoff-Gemische in Getreide, z.B:
- in Weizen gegen Pseudocercosporella herpotrichoides, Erysiphe graminis, Septoria tritici, Septoria nodorum und Pyrenophora tritici-repentis;
- in Gerste gegen Pseudocercosporella herpotrichoides, Erysiphe graminis, Pyrenophora teres, Rhynchosporium secalis und Typhula incarnata;
- in Raps gegen Alternaria brassicae, Cylindrosporium concentricum, Phoma lingam und Pseudocercosporella capsellae.

Insbesondere Pilze, die gegen als 14-C-Demethylierungshemmer wirkende Fungizide eine gewisse Resistenz entwickelt haben, lassen sich mit den erfindungsgemässen Wirkstoffgemischen vorteilhaft bekämpfen und verhüten.

Besonders wirksam können Blattkrankheiten wie Erysiphe graminis, Septoria tritici, Septoria nodorum, Pyrenophora tritici-repentis, Pyrenophora teres und Rhynchosporium secalis in Weizen und Gerste bekämpft und verhütet werden.
Weiterhin kann ganz besonders wirksam Pseudocercosporella herpotrichoides in Weizen und Gerste bekämpft und verhütet werden.
Ferner werden mit den erfindungsgemässen Wirkstoff-Gemischen gute Wirkungen gegen Botrytis cinerea in Aepfeln und Reben erzielt.

Die Wirkstoff-Gemische der Formeln I und II werden üblicherweise in Form von Zusammensetzungen verwendet. Die Wirkstoffe der Formel I und der Formel II können gleichzeitig, können aber auch nacheinander am selben Tage auf die zu behandelnde Fläche oder Pflanze gegeben werden, zusammen mit gegebenenfalls weiteren in der Formulierungstechnik üblichen Trägerstoffen, Tensiden oder anderen applikations-fördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Die Verbindungen der Formeln I und II können auch auf Samenkörner aufgebracht werden (Coating), indem man die Körner entweder nacheinander in einer flüssigen Zubereitung eines Wirkstoffs tränkt oder sie mit einer bereits kombinierten feuchten oder trockenen Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 50 g bis 2 kg AS/ha, insbesondere bei 100 g bis 1000 g AS/ha, besonders bevorzugt bei 250 g bis 850 g AS/ha.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen C₈ bis C₁₂, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethylether oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehl verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art der zu formulierenden Wirkstoffe der Formeln I und II nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:
- "Mc Cutcheon's Detergents and Emulsifiers Annual" MC Publishing Corp., Glen Rock, New Jersey, 1988.
- M. and J. Ash, "Encyclopedia of Surfactants", Vol. I-III, Chemical Publishing Co., New York, 1980-1981.

Besonders vorteilhafte, applikationsfördernde Zuschlagstoffe sind ferner natürliche oder synthetische Phospholipide aus der Reihe der Kephaline und Lecithine, wie z.B. Phosphatidylethanolamin, Phosphatidylserin, Phosphatidylglycerin, Lysolecithin.

Die agrochemischen Zubereitungen enthalten in der Regel 0,1 bis 99 %, insbesondere 0,1 bis 95% Wirkstoffe der Formeln I und II, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Derartige (agro)chemische Mittel sind ein Bestandteil der vorliegenden Erfindung.

Die nachfolgenden Beispiele dienen der Illustration der Erfindung, wobei "Wirkstoff" ein Gemisch aus Verbindung I und Verbindung II in einem bestimmten Mischungs-Verhältnis bedeutet.

### Formulierungsbeispiele

| Spritzpulver | | | |
|---|---|---|---|
| | a) | b) | c) |
| Wirkstoff [I:II = 2:3(a), 1:1 (b), 1:6(c)] | 25 % | 50 % | 75 % |
| Na-Ugninsulfonat | 5% | 5 % | - |
| Na-Laurylsulfat | 3% | - | 5% |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5% | 10 % | 10 % |
| Kaolin | 62% | 27% | - |

Die Wirkstoffe werden mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 2:5) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Verdünnung hergestellt werden, die sich im Pflanzenschutz, einsetzen lassen.

| Stäubemittel | | | |
|---|---|---|---|
| | a) | b) | c) |
| Wirkstoff [I:II = 1:4 (a); 1:5 (b) und 1:1 (c)] | 5 % | 6 % | 4 % |
| Talkum | 95 % | - | - |
| Kaolin | - | 94% | - |
| Gesteinsmehl | - | - | 96 % |

Man erhält anwendungsfertige Stäubemittel, indem der Wirkstoff mit dem Träger vermischt und auf einer geeigneten Mühle vermahlen wird. Solche Pulver lassen sich auch zur Trockenbeize für Saatgut verwenden.

| Extruder Granulat | |
|---|---|
| Wirkstoff (I:II = 2:3) | 15% |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 3:5) | 8% |
| Polyethylenglykol (MG 200) | 3 % |
| Kaolin (MG = Molekulargewicht) | 89 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:II = 3:7) | 40 % |
| Propylenglykol | 10 % |
| Nonylphenolpolyethylenglykolether (15 Mol Et-oxid) | 6 % |
| Na-Ligninsulfonat | 10 % |
| Carboxymethylcellulose | 1 % |
| Silikonöl (in Form 75%ig. wässriger Emulsion) | 1 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen sowie pflanzliches Vermehrungsgut durch Besprühen, Begiessen oder Eintauchen behandeln und vor Mikoorganismen-Befall schützen.

### Biologische Beispiele

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel und kann wie folgt berechnet werden, (COLBY, LR. "Calculating synergistic and antagonistic responses of herbicide combination". Weeds 15, Seiten 20-22; 1967):
- ppm =: Milligramm Wirkstoff (=WS) pro Liter Spritzbrühe
- X=: % Wirkung durch Fungizid I bei Anwendung von p ppm Wirkstoff
- Y=: % Wirkung durch Fungizid II bei Anwendung von q ppm Wirkstoff
- E=: die erwartete Wirkung der Fungizide I+II bei Anwendung von p+q ppm Wirkstoff (additive Wirkung),
dann ist nach Colby: E = X+Y- (X·Y)/100
Wenn die tatsächlich beobachtete Wirkung (O) grösser ist als die erwartete, so ist die Kombination in ihrer Wirkung überadditiv, d.h. es liegt ein synergistischer Effekt vor. In den folgenden Beispielen wird der Befall der unbehandelten Pflanzen gleich 100% gesetzt, was einer Wirkung von 0% entspricht.

### Beispiel 1: Wirkung gegen Pseudocercosporella herpotrichoides auf Weizen

10 Tage alte Weizenpflanzen werden mit einer aus dem formulierten Wirkstoff bzw. Wirkstoffkombination hergestellten Spritzbrühe tropfnass eingesprüht. Nach 48 Stunden werden die behandelten Pflanzen mit einer Konidiensuspension des Pilzes (Wheat- bzw. Rye-Typ) infiziert, anschliessend werden die behandelten Pflanzen während 2 Tagen bei 90-100% relativer Luftfeuchtigkeit und 20°C inkubiert und während 8 weiteren Wochen in einer Klimakammer bei 12°C aufgestellt. 9 Wochen nach der Infektion wird der Pilzbefall beurteilt.
Bei Konzentrationen des Wirkstoffes I von 60 ppm und des Wirkstoffes II von 200 ppm werden folgende Resultate erzielt:

| Pilz-Typ | % Wirkung | | | | Synergiefaktor |
|---|---|---|---|---|---|
| | WS I 60 ppm | WS II 200 ppm | E berechnet WS (I + II) (60 + 200) ppm | O gefunden | O/E |
| Wheat-T | 13 | 20 | 30.4 | 52 | 1.71 |
| Rye-T | 2 | 10 | 11.8 | 45 | 3.81 |

### Beispiel 2: Wirkung gegen Botrytis cinerea auf Aepfeln

Künstlich verletzte Aepfel werden behandelt, indem eine Spritzbrühe (30 Mikroliter des Wirkstoffes bzw. der Wirkstoffkombination) auf die Verletzungsstelle aufgetropft wird. Die behandelten Früchte werden anschliessend mit einer Sporensuspension des Pilzes inokuliert und während einer Woche bei hoher Luftfeuchtigkeit bei ca. 20°C inkubiert. Aus der Anzahl und Grösse der angefaulten Verletzungsstellen wird die fungizide Wirkung der Testsubstanz abgeleitet. Bei Konzentrationen des Wirkstoffes I von 6 ppm und des Wirkstoffes II von 2 ppm werden folgende Resultate erzielt:

| % Wirkung | | | | Synergiefaktor |
|---|---|---|---|---|
| WS I 6 ppm | WS II 2 ppm | E berechnet WS(I+II) (6 + 2)ppm | O gefunden | O/E |
| 40 | 40 | 64 | 85 | 1.33 |

### Beispiel 3: Wirkung gegen Botrytis cinerea auf Reben

Rebensämlinge im 4 bis 5 Blatt-Stadium werden mit einer aus Spritzpulver des Wirkstoffes hergestellten wässrigen Spritzbrühe tropfnass besprüht und 24 Stunden später mit einer Sporangiensuspension des Pilzes infiziert. Der Pilzbefalls wird 6 Tage nach der Infektion beurteilt, während denen 95 bis 100 Prozent relative Luftfeuchtigkeit und eine Temperatur von 20° aufrechterhalten werden.

| Versuch A): Konzentrationen Wirkstoffe I und II je 6 ppm | | | | | |
|---|---|---|---|---|---|
| % Wirkung | | | | | Synergiefaktor |
| WS I 6 ppm | WS II 6 ppm | E berechnet WS (I+II) (6 + 6)ppm | O gefunden | O/E | |
| 18 | 18 | 33 | 76 | 2.3 | |

| Versuch B):Konzentrationen Wirkstoffe I und II je 2 ppm | | | | | |
|---|---|---|---|---|---|
| % Wirkung | | | | | Synergiefaktor |
| WS I 2 ppm | WS II 2 ppm | E berechnet WS (I+II) (2 + 2)ppm | O gefunden | O/E | |
| 18 | 0 | 18 | 35 | 1.9 | |

### Beispiel 4: Wirkung gegn Erysiphe graminis auf Winterweizen

In Töpfen von 16 cm Durchmesser werden im Gewächshaus ca. 20 Pflanzen der Winterweizensorte "Bernina" bei 20°C und 60% relativer Luftfeuchte während 12 Std. bei Tag bzw. bei 16°C und 80 % relativer Luftfeuchte während der Nacht herangezogen. Zu Beginn der Bestockung (EC 21) werden die Pflanzen mit einem Isolat von Erysiphe graminis f.sp. tritici inokuliert, das eine reduzierte Sensitivität gegen DMI-Fungizide aufweist.
3 Tage nach der Inokulation wird der Einzelwirkstoff bzw. das Fungizid-Gemisch als wässrige Suspension mit einem Spritzbalken unter Feldbedingungen mit einer Wasser-aufwandmenge von 500 l/ha appliziert. 4 Tage bzw. 11 Tage nach der Applikation wird die Veränderung des Befalls auf der bei der Inokulation vorhandenen Blattfläche bestimmt (Auswertung des Primärbefalls). Jeder der Versuche läuft in 3 Wiederholungen. Dabei tritt bei unterschiedlichen Mischungsverhältnissen der Komponenten I und II eine synergistisch gesteigerte Fungizid-Wirkung auf.

### Beispiel 5: Wirkung gegen Pyrenophora teres auf Gerste

6 Tage alte Gerstenpflanzen werden mit einer aus dem formulierten Wirkstoff bzw. Wirkstoffkombination hergestellten Spritzbrühe tropfnass besprüht. Nach 2 Tagen werden die Pflanzen mit Sporensuspension von Pyrenophora teres inokuliert und bei 21 °C und 90-100% Luftfeuchtigkeit im Gewächshaus inkubiert. Nach einer Woche wird der Pilzbefall beurteilt.
Dabei tritt bei unterschiedlichen Mischungsverhältnissen der Komponenten I und II eine synergistisch gesteigerte Fungizid-Wirkung auf.

## Patentansprüche

1. Pflanzenmikrobizides Mittel enthaltend zwei Wirkstoff-Komponenten in einem eine synergistische Wirkung erzeugende Mengenverhältnis, dadurch gekennzeichnet, dass die eine Komponente (I) das Imidazol der Formel 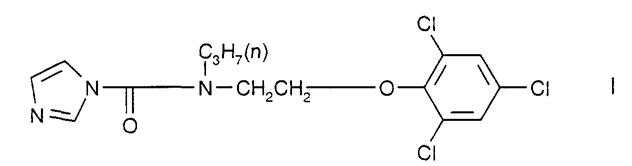 N-Propyl-N-[2-(2,4,6-trichlorophenoxy)ethyl]imidazol-1-carboxamid (= Prochloraz) oder eines seiner Salze oder seiner Metallkomplexe, und die andere Komponente (II) das 2-Anilinopyrimidin der Formel 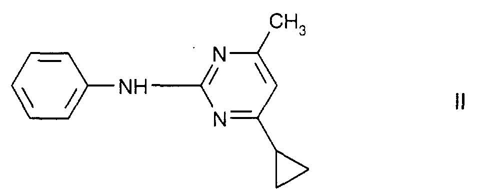 4-Cyclopropyl-6-methyl-N-phenyl-2-pyrimidinamin (= Cyprodinil) oder eines seiner Salze oder seiner Metallkomplexe ist, zusammen mit geeigneten Trägerstoffen.

2. Mittel nach Anspruch 1, dadurch gekennzeichnet, dass das Gewichtsverhältnis I:II = 10:1 bis 1:20 beträgt.

3. Mittel nach Anspruch 2, dadurch gekennzeichnet, dass das Gewichtsverhältnis I:II = 6:1 bis 1:6 beträgt.

4. Mittel nach Anspruch 3, dadurch gekennzeichnet, dass das Gewichtsverhältnis I:II = 3:1 bis 1:3 beträgt.

5. Verwendung eines Mittels gemäss Anspruch 1 zur Bekämpfung und Verhütung von Pflanzenkrankheiten.

6. Verfahren zur Bekämpfung und Verhütung von Pflanzenkrankheiten, dadurch gekennzeichnet, dass man in beliebiger Reihenfolge am selben Tag oder gleichzeitig eine durch Pilze befallene oder gefährdete Stelle mit der Komponente I und der Komponente II gemäss Anspruch 1 behandelt.

7. Verfahren gemäss Anspruch 6, dadurch gekennzeichnet, dass Getreide behandelt wird.

8. Verfahren gemäss Anspruch 6, dadurch gekennzeichnet, dass der Pilz Pseudocercosporella herpotrichoides in Weizen und Gerste bekämpft und verhütet wird.

9. Verfahren gemäss Anspruch 6, dadurch gekennzeichnet, dass Blattkrankheiten in Weizen und Gerste bekämpft und verhütet werden.

10. Verfahren gemäss Anspruch 6, dadurch gekennzeichnet, dass pflanzliches Vermehrungsgut behandelt wird.

11. Pflanzenvermehrungsgut, das gemäss Anspruch 10 behandelt wurde.

## Claims

1. A phytomicrobicidal composition comprising two active components in a proportion which produces a synergistic effect, wherein component (I) is the imidazole of formula 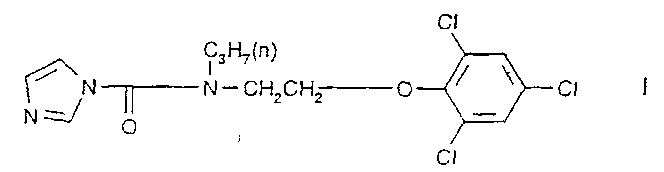 N-propyl-N-[2-(2,4,6-trichlorophenoxy)ethyl]imidazole-1-carboxamide (= prochloraz) or a salt or metal complex thereof, and component (II) is the 2-anilinopyrimidine of formula 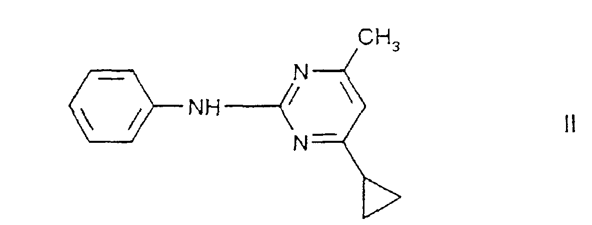 4-cyclopropyl-6-methyl-N-phenyl-2-pyrimidinamine (= cyprodinil) or a salt or metal complex thereof, together with suitable carriers.

2. A composition according to claim 1, wherein the weight ratio of I:II is 10:1 to 1:20.

3. A composition according to claim 2, wherein the weight ratio of I:II is 6:1 to 1:6.

4. A composition according to claim 3, wherein the weight ratio of I:II is 3:1 to 1:3.

5. Use of a composition according to claim 1 for controlling and preventing plant diseases.

6. A method of controlling and preventing plant diseases, which comprises treating a locus infested, or liable to be infested, with fungi with component I and component II according to claim 1, in any order on the same day or simultaneously.

7. A method according to claim 6, wherein cereals are treated.

8. A method according to claim 6, which comprises controlling and preventing the fungus Pseudocercosporella herpotrichoides in wheat and barley.

9. A method according to claim 6, which comprises controlling and preventing leaf diseases in wheat and barley.

10. A method according to claim 6, which comprises treating plant propagation material.

11. Plant propagation material treated according to claim 10.

## Revendications

1. Composition microbicide pour les plantes contenant deux composants substance active dans un rapport produisant un effet de synergie, caractérisée en ce que l'un des composants (I) est l'imidazole de formule 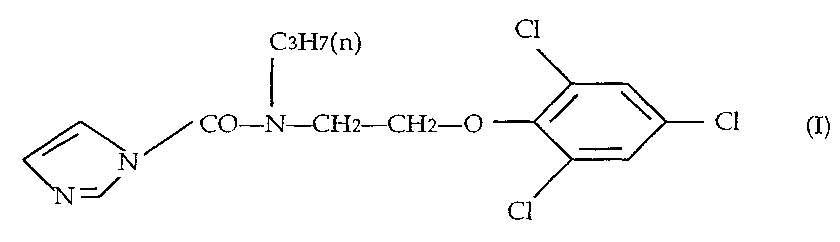 le N-propyl-N-[2-(2,4,6-trichlorophénoxy)-éthyl]-imidazol-1-carboxamide (= Prochloraz) ou l'un de ses sels ou de ses complexes métalliques et l'autre composar (II) la 2-anilinopyrimidine de formule 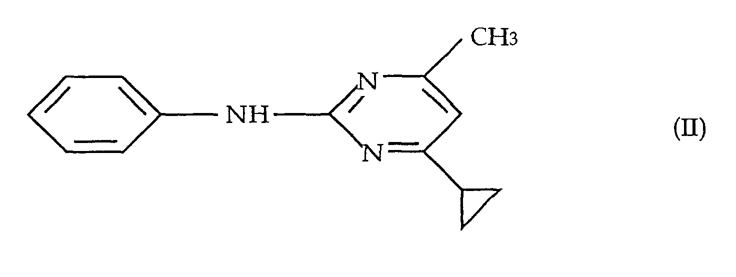 la 4-cyclopropyl-6-méthyl-N-phényl-2-pyrimidineamine (= Cyprodinil) ou l'un de ses sels ou de ses complexes métalliques, associés à des supports appropriés.

2. Composition selon la revendication 1, caractérisée en ce que le rapport pondéral I:II est compris entre 10:1 et 1:20.

3. Composition selon la revendication 2, caractérisée en ce que le rapport pondéral I:II est compris entre 6:1 et 1:6.

4. Composition selon la revendication 3, caractérisée en ce que le rapport pondéral I:II est compris entre 3:1 et 1:3.

5. Utilisation d'une composition selon la revendication 1 pour lutter contre et prévenir les maladies des plantes.

6. Procédé pour lutter contre et prévenir les maladies des plantes caractérisé en ce que l'on traite dans un ordre quelconque le même jour ou simultanément un endroit attaqué ou menacé par les champignons avec les composants I et II selon la revendication 1.

7. Procédé selon la revendication 6, caractérisé en ce que l'on traite les céréales.

8. Procédé selon la revendication 6, caractérisé en ce que l'on lutte contre et prévient le champignon Pseudocercosporella herpotrichoides dans le blé et l'orge.

9. Procédé selon la revendication 6, caractérisé en ce que l'on lutte contre et prévient les maladies des feuilles dans le blé et l'orge.

10. Procédé selon la revendication 6, caractérisé en ce que l'on traite les produits de reproduction des plantes,

11. Produits de reproduction des plantes traités selon la revendication 10.
